# EUROPÄISCHE PATENTSCHRIFT

(11) **EP 2 935 007 B1**
(45) Veröffentlichungstag und Bekanntmachung des Hinweises auf die Patenterteilung: **04.12.2019**
(21) Anmeldenummer: 13815760.7
(22) Anmeldetag: 23.12.2013
(51) Int. Cl.: B64D 11/06, B60N 2/90, B60N 3/10, B60N 2/75, B60N 3/00, B64D 11/00

(54) **FAHRZEUGSITZ MIT EINER TRÄGERPLATTFORM**
VEHICLE SEAT WITH A SUPPORT PLATFORM
SIÈGE DE VÉHICULE AVEC UN PLATEFORME DE SUPPORT

(30) Priorität: 24.12.2012 DE 102012224358
(43) Veröffentlichungstag der Anmeldung: 28.10.2015
(73) Patentinhaber: Lufthansa Technik AG, 22335 Hamburg (DE)
(72) Erfinder: THOMASCHEWSKI, Oliver, 22846 Norderstedt (DE); PIERREJEAN, Jacques, F-20166 Pietrosella (FR)
(74) Vertreter: Müller Verweyen
(86) Internationale Anmeldenummer: PCT/EP2013/077887
(87) Internationale Veröffentlichungsnummer: WO 2014/102235

(56) Entgegenhaltungen:
- WO-A1-2011/070516
- JP-A- 2001 017 269
- US-A1- 2012 032 479

## Beschreibung

Die Erfindung betrifft einen Fahrzeugsitz.

Fahrzeugsitze, beispielsweise in Flugzeugen, weisen typischerweise in ihrer Umgebung verschiedene Funktionalitäten auf, die von einem Passagier, welcher auf dem Fahrzeugsitz sitzt, genutzt werden können. Derartige Funktionalitäten können beispielsweise Klapptabletts, Becherhalter, Bildschirme oder weitere Halter sein, welche vom Passagier während der Reise genutzt werden können. Die entsprechenden Geräte oder Vorrichtungen zur Realisierung der Funktionalitäten sind in der Regel an benachbarten Fahrzeugsitzen oder am Fahrzeugsitz selbst angebracht.

In verschiedenen Kabinenausstattungen ist der Fahrzeugsitz räumlich in größerem Abstand zu weiteren Fahrzeugsitzen in der Kabine eines Fahrzeugs angeordnet. Dies ist z.B. bei VIP Ausstattungen von Flugzeugen der Fall, wo die Möglichkeit, die angrenzenden Fahrzeugsitze zur Platzierung der verschiedenen Funktionalitäten zu nutzen, entfällt. Daher werden üblicherweise Kinematiken eingesetzt, so dass beispielsweise ein Tisch aus der Armlehne ausklappbar ist. Die Möglichkeit, eine Vielzahl von Funktionalitäten am Fahrzeugsitz oder im Bereich zu realisieren, bleibt daher vergleichsweise beschränkt. Weiterhin ergibt sich für die Fahrzeugsitze mit vielen Anbauten zur Realisierung der verschiedenen Funktionalitäten ein massiges Erscheinungsbild, um die verschiedenen Kinematiken aufnehmen zu können, welches aber aus ästhetischen Gesichtspunkten unerwünscht ist.

Die Aufgabe der Erfindung ist es, einen Fahrzeugsitz anzugeben, der die oben genannten Nachteile überkommt.

Die Aufgabe der Erfindung wird mit den Merkmalen des Anspruchs 1 gelöst.

Das anschließbare Trägermodul erlaubt eine Vielzahl von am Fahrzeugsitz anschließbaren Funktionalitäten, die in einfacher Weise getauscht, modernisiert oder an besondere Anforderungen angepasst werden können. Der Fahrzeugsitz kann hierbei unabhängig von wechselnden Anforderungen gleich gehalten werden, was zu einer vereinfachten Bauweise und einem Kostenvorteil führen kann. Sicherheitstechnisch ermöglicht das abnehmbare Trägermodul eine große Gestaltungsfreiheit im Bereich des Sitzes, da das Trägermodul bei einem Einsatz in Flugzeugen beim Übergang in kritische Flugphasen, wie z.B. Start, Landung oder Rollen, abgenommen werden kann, und auf diese Weise im Fall eines Zwischenfalls die Sicherheit eines auf dem Fahrzeugsitz sitzenden Passagiers nicht beeinflusst. Die Parkstellung der Trägerplattform dient hierbei ebenfalls zu einer Erhöhung der Sicherheit in solchen Flugphasen, da der Passagier nicht in ungewünschten mechanischen Kontakt mit der in der Aufnahme der Armlehne verborgenen Trägerplattform geraten kann. Weiterhin ermöglichen die beiden Stellungen der Trägerplattform eine ästhetisch ansprechende Kontur des Fahrzeugsitzes bei nicht angeschlossenen Trägermodulen. Insbesondere kann die Trägerplattform an der Außenseite derart geformt sein, dass die Außenseite der Trägerplattform in der Parkstellung die Außenform zu einem harmonischen, insbesondere durchgehenden, Verlauf ergänzt.

Die anschließbaren und auch wieder abnehmbaren Trägermodule mit unterschiedlichen Funktionalitäten eignen sich insbesondere für wechselnde Anforderungen eines Passagiers während einer Reise. Dies kann bei VIP Transporten vorteilhaft genutzt werden, da häufig ein großer Sitzabstand vorliegt, der die übliche Nutzung umgebender Sitze oder Kabinenteile zur Anbringung von Funktionalitäten verhindert. Die verschiedenen Trägermodule können beispielsweise durch das Kabinenpersonal während des Fluges getauscht werden. Die nicht verwendeten Trägermodule können insbesondere in einer VIP Kabine mit einer kleineren Passagieranzahl in einfacher Weise verstaut werden.

Die Verbindungsvorrichtung kann beispielsweise an dem Verbindungsanschluss in einer vorteilhaften Ausführungsform in Form einer Steckverbindung angeschlossen werden. Alternativ können auch Klemm-, Clip-, oder Schraubverbindungen sowie weitere lösbare mechanische Verbindungen angewendet werden.

Vorzugsweise umfasst der Fahrzeugsitz mindestens eine Armlehne, wobei mindestens eine Aufnahme und eine bewegliche Trägerplattform an oder in einer Armlehne angeordnet sind. Eine Armlehne bietet eine vorteilhafte Möglichkeit eine Aufnahme mit der entsprechenden beweglichen Trägerplattform an einem Fahrzeugsitz zu positionieren. Der entsprechende Bauraum kann in einer Armlehne an dem Fahrzeugsitz in einfacher Weise bereit gestellt werden.

Weiterhin ist die Trägerplattform in der Parkstellung mindestens so weit in die Aufnahme einschiebbar, dass der mechanische Verbindungsanschluss verdeckt ist. Die Trägerplattform ist daher mindestens so weit in der Aufnahme der Armlehne verborgen, dass der Verbindungsanschluss nicht sichtbar und kein Anschluss von Trägermodulen möglich ist. Somit kann die Trägerplattform vorzugsweise nach einer Entriegelung durch einen Bediener bzw. Passagier gegriffen und in eine Nutzstellung bewegt werden. In weiteren vorteilhaften Ausführungsformen kann die Trägerplattform vollständig in der Parkstellung verborgen bzw. verdeckt sein.

Vorteilhafterweise ist die Verbindungsvorrichtung eines Trägermoduls drehbar an dem Verbindungsanschluss der Trägerplattform anschließbar. Der drehbare Anschluss ermöglicht vorteilhafte Schwenkbewegungen, so dass das Trägermodul von einem Passagier entsprechend seiner körperlichen Verhältnisse und seiner Sitzposition eingestellt werden kann. Die Kombination des mechanischen Anschlusses von Verbindungsvorrichtung und Verbindungsanschluss und eines resultierenden Drehgelenks erlaubt eine einfache und leichte Konstruktion, da kein separates Drehgelenk vorgesehen werden muss, um eine derartige Einstellmöglichkeit für den Passagier zu erreichen. Zudem ist ein Anschließen des Trägermoduls an die Trägerplattform auf diese Weise in verschiedenen Drehpositionen bzw. Winkelstellungen möglich, was insbesondere bei einem seitlichen Anschluss durch das Kabinenpersonal, wenn der Passagier auf dem Fahrzeugsitz sitzt, vorteilhaft ist. Die Drehbarkeit zwischen Trägermodul und Trägerplattform ist vorzugsweise ausreichend reibungsbehaftet, um ein ungewolltes Drehen des Trägermoduls durch gewöhnliche Fahrzeugbewegungen zu verhindern.

In bevorzugten Ausführungsformen ragt mindestens eine Trägerplattform in der Nutzstellung in Sitzrichtung aus der Armlehne heraus. Dies ist eine vorteilhafte Anordnung, so dass sich die Trägerplattform ergonomisch griffgünstig in der Nähe der Hand eines Sitzenden bei einer üblichen Sitzposition befindet.

Weiterhin ragt vorzugsweise mindestens eine Trägerplattform in der Nutzstellung entgegen der Sitzrichtung aus der Armlehne heraus. Eine derartige Anordnung ist bei einer Liegeposition des Fahrzeugsitzes vorteilhaft, wenn die Rückenlehne stark nach hinten entgegen der Sitzrichtung geklappt ist, und der Passagier sich auf dem Fahrzeugsitz in einer Liegeposition befindet. Ein Trägermodul an einer derartig positionierten Trägerplattform kann für den Passagier ohne Aufrichten des Oberkörpers aus der Liegeposition erreichbar oder auch sichtbar sein.

Das Trägermodul ist über den Verbindungsanschluss und die Verbindungsvorrichtung des Trägermoduls an einen elektrischen Versorgungsstromkreis anschließbar. Das Trägermodul selbst kann daher einen elektrischen Verbraucher aufweisen, z.B. eine Lampe. Darüber hinaus kann an dem Trägermodul ein Anschluss bzw. eine Halterung eines elektrischen bzw. elektronischen Geräts vorgesehen sein, welches durch den elektrischen Versorgungsstromkreis dauerhaft durch den Passagier betrieben werden kann. Der Versorgungsstromkreis kann beispielsweise durch das Fahrzeug bzw. Flugzeug bereit gestellt werden. Eine bevorzugte Versorgungsspannung des Versorgungsstromkreises ist 5 V Gleichspannung. Weiterhin können verschiedene Steuersignale alternativ, ergänzend oder alternierend zu dem Anschluss an den elektrischen Versorgungsstromkreis an das Trägermodul übertragen werden.

In einer vorteilhaften Ausführungsform sind zwischen Verbindungsanschluss und Verbindungsvorrichtung mindestens zwei elektrische Schleifkontakte schließbar. Die Schleifkontakte ermöglichen eine einfache Stromübertragung und/oder Datenübermittlung, insbesondere bei einer Drehung des Trägermoduls gegenüber der Trägerplattform, so dass ein zusätzlicher Anschlussvorgang mit Steckern bei einem Anschluss oder Wechsel eines Trägermoduls vermieden kann.

Das Trägermodul umfasst in vorteilhaften Ausführungsformen ein Tablett und/oder einen Getränkehalter und/oder eine Buchhalterung. Auf diese Weise können dem Passagier am Fahrzeug entsprechende Funktionalitäten ohne Einbindung eines angrenzenden Sitzes oder eines Kabinenteils ermöglicht werden. Entsprechende Trägermodule können während der Reise entsprechend der Wünsche des Passagiers getauscht werden.

In weiteren vorteilhaften Ausführungsformen umfasst das Trägermodul eine Telefonhalterung und/oder eine Bildschirmhalterung und/oder einen Bildschirm. Die Bildschirmhalterung kann vorzugsweise auch Geräte halten, die primär über ihren Bildschirm steuerbar sind, wie z.B. Tablet-Computer. Derartige Halterungen sind vorteilhaft, da sie über einen längeren Zeitraum nur mühevoll in der Hand gehalten werden können und sich in VIP Kabinen, z.B. eines Flugzeugs, aufgrund eines großen Sitzabstands kaum Möglichkeiten bieten, kleinere sitzbezogene Bildschirme für den Passagier anzuordnen.

Vorzugsweise ist an dem Fahrzeugsitz ein Stauraum für mindestens ein Trägermodul vorgesehen. Die Trägermodule werden notwendigerweise bei einer Nichtbenutzung, unter anderem bei Start- und Landevorgängen gelagert. Prinzipiell kann die Lagerung in der gesamten Kabine erfolgen, jedoch ist ein am Fahrzeugsitz vorgesehener Stauraum, beispielsweise an den Armlehnen oder unter dem Fahrzeugsitz, vorteilhaft, um eine kurzfristige Verfügbarkeit verschiedener Trägermodule auch für den Passagier selbst zu ermöglichen.

Die Erfindung wird im Folgenden anhand bevorzugter Ausführungsformen unter Bezugnahme auf die beigefügten Figuren erläutert. Dabei zeigt:
- Fig. 1: einen Fahrzeugsitz mit einer Trägerplattform in einer Parkstellung und einer Trägerplattform in einer Nutzstellung;
- Fig. 2: eine Armlehne mit einem angeschlossenen Trägermodul als Tablett;
- Fig. 3: eine Armlehne mit Trägerplattform und ein Trägermodul mit einem transparenten Tablett;
- Fig. 4: einen Fahrzeugsitz in einer Liegeposition mit einer entgegen der Sitzrichtung herausragenden Trägerplattform mit einem angeschlossenen Trägermodul;
- Fig. 5: eine Armlehne mit einem drehbaren Trägermodul mit einer Bildschirmhalterung;
- Fig. 6: eine Armlehne mit einem drehbaren Trägermodul mit einem Getränkehalter; und
- Fig. 7: eine Armlehne mit einem Trägermodul mit einem Telefonhalter.

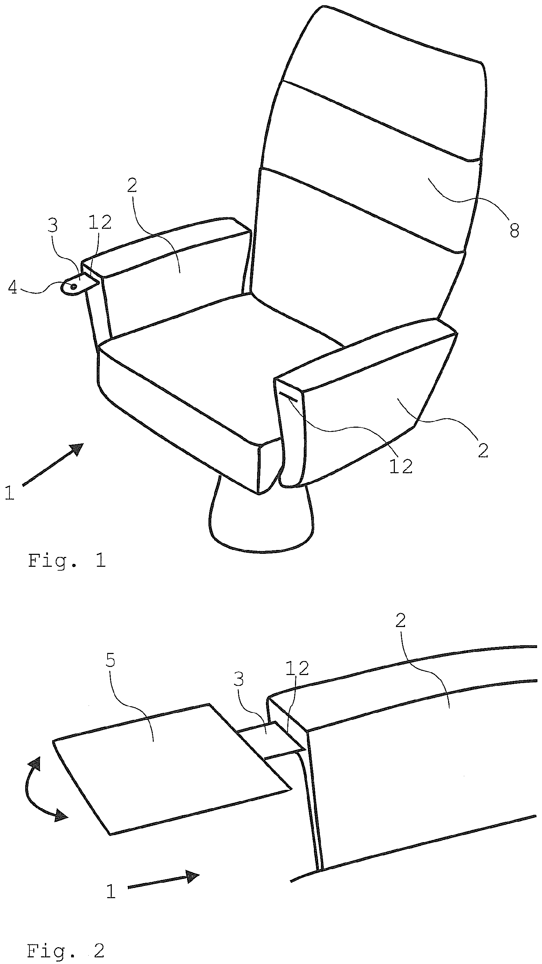

In Fig. 1 ist ein vorteilhaftes Ausführungsbeispiel eines Fahrzeugsitzes 1 dargestellt. Der Fahrzeugsitz 1 hat zwei Armlehnen 2, in denen jeweils eine Trägerplattform 3 integriert ist. In der in Sitzrichtung rechten Armlehne 2, in Fig. 1 oben dargestellt, befindet sich die Trägerplattform 3 in einer Nutzstellung, in welcher die Trägerplattform 3 von der Armlehne 2 in Sitzrichtung herausragt.

An der Trägerplattform 3 ist in diesem Ausführungsbeispiel kein Trägermodul 5 angeschlossen, so dass der Verbindungsanschluss 4 zum mechanischen Anschluss eines Trägermoduls 5 sichtbar dargestellt ist. Der Verbindungsanschluss 4 kann beispielsweise in Form einer runden Öffnung ausgebildet sein.

Die linke Trägerplattform 3 befindet sich in einer Parkstellung und ist in die Aufnahme 12 der linken Armlehne 2 eingezogen, so dass sie nicht wesentlich aus der Kontur der Armlehne 2 herausragt.

Die Trägerplattform 3 kann daher in bevorzugten Ausführungsbeispielen aus der Aufnahme 12 linear und vorzugsweise horizontal ausgezogen werden, wobei auch andersförmige Bewegungsverläufe zwischen Parkstellung und Nutzstellung angewendet werden können. In der Parkstellung und/oder in der Nutzstellung kann eine Rastierung vorgesehen sein, welche eine Fixierung der Trägerplattform 3 ermöglicht, so dass eine solche Stellung auch gegenüber gewissen mechanischen Lasten gehalten werden kann.

Die Beweglichkeit zwischen den einzelnen Raststellungen kann beispielsweise durch einen Knopf oder einen Hebel von einem Bediener ermöglicht werden. In möglichen Ausführungsbeispielen kann die Trägerplattform federbelastet sein, und sich daher selbsttätig beim Lösen einer Blockierung von einer Raststellung in eine andere bewegen. Die andere Bewegungsrichtung kann beispielsweise durch einen Bediener ausgeführt werden. In weiteren Ausführungsbeispielen kann ein Wechsel zwischen den Raststellungen bzw. zwischen Park- und Nutzstellung durch einen elektrischen und/oder pneumatischen Antrieb erfolgen.

In Fig. 2 ist ein mögliches Trägermodul 5 als Tablett auf der Trägerplattform 3 aufgesetzt. Das Tablett ist hierbei um eine Hochachse schwenkbar, so dass es vor den Oberkörper eines Passagiers geschwenkt oder, z.B. um ein Aufstehen des Passagiers zu ermöglichen, seitlich von dem Fahrzeugsitz 1 weggedreht werden kann.

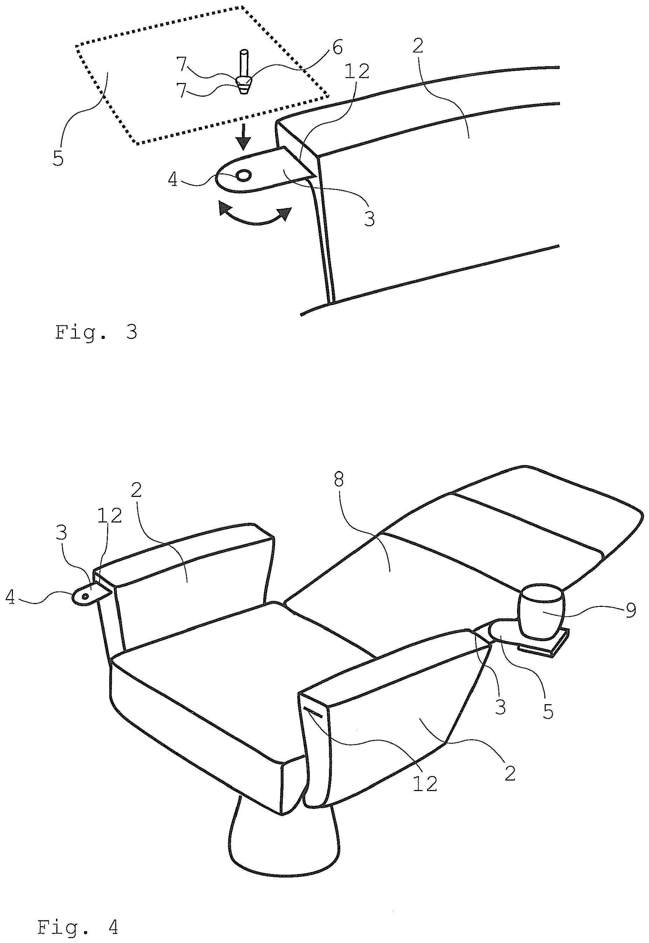

Fig. 3 zeigt ein vergleichbares Trägermodul 5 wie die Fig. 2, wobei in diesem Ausführungsbeispiel die Hauptplatte des Tabletts transparent gestaltet ist, so dass die mechanische Verbindungsvorrichtung 6 des Trägermoduls 5 erkennbar ist. Das Trägermodul 5 kann somit in diesem Ausführungsbeispiel von oben auf die Trägerplattform 3 aufgesteckt werden, so dass die Verbindungsvorrichtung 6 in den Verbindungsanschluss 4 gesteckt werden kann. Diese Verbindung ist in vorteilhaften Ausführungsbeispielen gegen ein ungewolltes Lösen gesichert. Die Verbindungsvorrichtung 6 ist vorteilhafterweise rotationssymmetrisch ausgeführt, so dass das Trägermodul 5 einfach gegenüber der Trägerplattform 3 gedreht werden kann.

Weiterhin sind im Ausführungsbeispiel der Fig. 3 zwei Schleifringe 7 zu erkennen, welche zum Anschluss des Trägermoduls 5 an einen elektrischen Versorgungsstromkreis dienen. In dem konkreten Ausführungsbeispiel der Fig. 3 kann beispielsweise eine Beleuchtung des transparenten Tabletts erzeugt werden.

Fig. 4 zeigt einen Fahrzeugsitz 1, dessen Rückenlehne 8 in eine flache Liegeposition gebracht wurde. Der Fahrzeugsitz 1 weist eine Trägerplattform 3 auf, welche in ihrer Nutzstellung entgegen der Sitzrichtung, in diesem Ausführungsbeispiel aus der linken Armlehne 2, in Fig. 4 unten dargestellt, herausragt. Auf der Trägerplattform 3 kann beispielsweise ein Trägermodul 5 mit einem Getränkehalter angeordnet sein, auf dem ein Trinkgefäß 9 sicher platziert werden kann. In dieser Anordnung einer Trägerplattform 3, welche rückwärtig aus der Armlehne 2 ausgezogen werden kann, kann ein Passagier in Liegeposition die Annehmlichkeit, hier das Trinkgefäß, bequem nutzen. Der Passagier muss sich dabei nicht aufrichten, um die Funktionalität des Trägermoduls 5 zu nutzen. Eine Parkstellung ist in diesem Fall ebenfalls vorteilhaft, da eine derart platzierte Trägerplattform 3 bei einer aufrechten Sitzposition das Gesamterscheinungsbild stören würde und zudem beim Passieren z.B. von Kabinenpersonal hinter dem Fahrzeugsitz 1 stören würde.

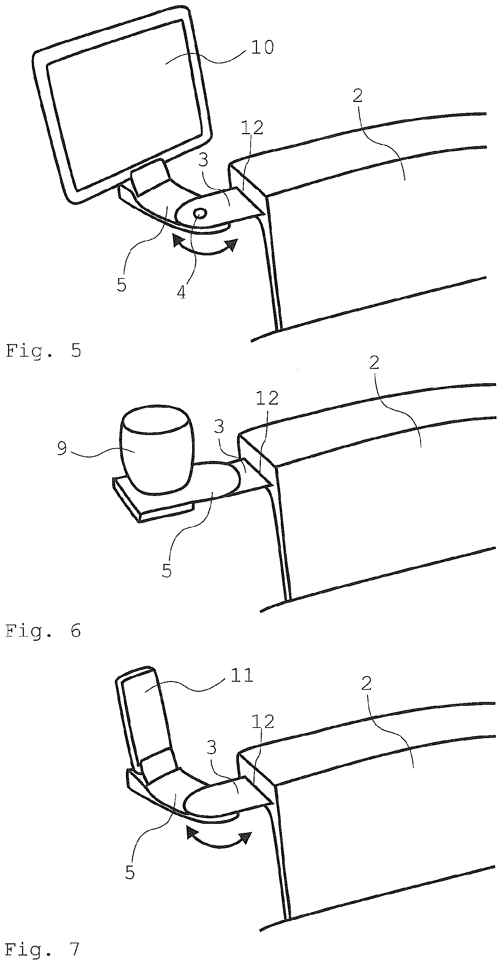

In Fig. 5 ist ein mögliches Ausführungsbeispiel eines Trägermoduls 5 gezeigt, welches einen Bildschirmhalter umfasst. Der Bildschirm ist hierbei ein Tablett-Computer 10, der an dem Bildschirmhalter fixiert werden kann, wobei der Bildschirm des Tablett-Computers 10 für den Passagier auf dem Fahrzeugsitz 1 sichtbar und ggf. bedienbar ist. Weiterhin ist in diesem Ausführungsbeispiel das Trägermodul 5 von unten in die Trägerplattform 3 gesteckt, worin es sich von den vorher gezeigten Ausführungsbeispielen unterscheidet. In möglichen vorteilhaften Ausführungsbeispielen erlaubt der Verbindungsanschluss 4 ein Anschließen einer Verbindungsvorrichtung 6 von oben und/oder von unten.

Ein weiteres Ausführungsbeispiel eines Trägermoduls 5, einen Getränkehalter umfassend, ist in Fig. 6 dargestellt, welcher im Gegensatz zum Ausführungsbeispiel der Fig. 3 an einer Trägerplattform 3 angesteckt ist, die in Sitzrichtung ausgerichtet ist, so dass der Getränkehalter bei einer aufrechten Sitzposition für einen Passagier gut zu erreichen ist. Daher kann das gleiche Trägermodul 5 bei liegender oder sitzender Nutzung des Fahrzeugsitzes 1 genutzt werden, wobei das Trägermodul 5 von einer Trägerplattform 3 an eine andere Trägerplattform 3 gesteckt wird.

Fig. 7 zeigt ein Trägermodul 5 mit einem Telefonhalter, auf dem ein Smartphone 11 befestigt ist. In vorteilhaften Ausführungsbeispielen ist das Trägermodul 5 an einen Versorgungsstromkreis des Fahrzeugs bzw. Flugzeugs angeschlossen, so dass das Smartphone 11 mit einer Gleichspannung von 5 V in dem Telefonhalter des Trägermoduls 5 versorgt werden kann.

## Patentansprüche

1. Fahrzeugsitz (1), wobei der Fahrzeugsitz (1) mindestens eine Aufnahme (12) und eine bewegliche Trägerplattform (3) aufweist, wobei
- die Trägerplattform (3) aus einer Parkstellung in eine Nutzstellung bewegbar ist, wobei
- die Trägerplattform (3) in der Parkstellung in der Aufnahme (12) gehalten ist,
- die Trägerplattform (3) einen mechanischen Verbindungsanschluss (4) aufweist, wobei
- an der Trägerplattform (3) in der Nutzstellung ein Trägermodul (5) mit einer mechanischen Verbindungsvorrichtung (6) an dem Verbindungsanschluss (4) der Trägerplattform (3) anschließbar und wieder abnehmbar ist, wobei
- in der Parkstellung kein Anschluss von Trägermodulen (5) möglich ist, **dadurch gekennzeichnet, dass**
- das Trägermodul (5) über die Verbindungsvorrichtung (6) und den Verbindungsanschluss (4) der Trägerplattform (3) an einen elektrischen Versorgungsstromkreis anschließbar ist, wobei
- alternativ, ergänzend oder alternierend zu dem Anschluss an den elektrischen Versorgungsstromkreis Steuersignale an das Trägermodul (5) übertragbar sind.

2. Fahrzeugsitz (1) nach Anspruch 1, **dadurch gekennzeichnet, dass** der Fahrzeugsitz (1) mindestens eine Armlehne (2) umfasst, wobei mindestens eine Aufnahme (12) und eine bewegliche Trägerplattform (3) an oder in einer Armlehne (2) angeordnet sind.

3. Fahrzeugsitz (1) nach Anspruch 2, **dadurch gekennzeichnet, dass** mindestens eine Trägerplattform (3) in der Nutzstellung in Sitzrichtung aus der Armlehne (2) herausragt.

4. Fahrzeugsitz (1) nach Anspruch 2 oder 3, **dadurch gekennzeichnet, dass** mindestens eine Trägerplattform (3) in der Nutzstellung entgegen der Sitzrichtung aus der Armlehne (2) herausragt.

5. Fahrzeugsitz (1) nach einem der vorangehenden Ansprüche, **dadurch gekennzeichnet, dass** die Trägerplattform (3) in der Parkstellung mindestens so weit in die Aufnahme (12) einschiebbar ist, dass der mechanische Verbindungsanschluss (4) verdeckt ist.

6. Fahrzeugsitz (1) nach einem der vorangehenden Ansprüche, **dadurch gekennzeichnet, dass** die Verbindungsvorrichtung (6) eines Trägermoduls (5) drehbar an dem Verbindungsanschluss (4) der Trägerplattform (3) anschließbar ist.

7. Fahrzeugsitz (1) nach einem der vorangehenden Ansprüche, **dadurch gekennzeichnet, dass** zwischen Verbindungsanschluss (4) und Verbindungsvorrichtung (6) mindestens zwei elektrische Schleifkontakte (7) schließbar sind.

8. Fahrzeugsitz (1) nach einem der vorangehenden Ansprüche, **dadurch gekennzeichnet, dass** das Trägermodul (5) ein Tablett und/oder einen Getränkehalter und/oder eine Buchhalterung umfasst.

9. Fahrzeugsitz (1) nach einem der vorangehenden Ansprüche, **dadurch gekennzeichnet, dass** das Trägermodul (5) eine Telefonhalterung und/oder eine Bildschirmhalterung und/oder einen Bildschirm umfasst.

10. Fahrzeugsitz (1) nach einem der vorangehenden Ansprüche, **dadurch gekennzeichnet, dass** an dem Fahrzeugsitz (1) ein Stauraum für mindestens ein Trägermodul (5) vorgesehen ist.

## Claims

1. Vehicle seat (1), wherein the vehicle seat (1) comprises at least one recess (12) and one movable carrier platform (3), wherein
- the carrier platform (3) can be moved out of a park position into a use position, wherein
- the carrier platform (3) is held in the recess (12) when in the park position,
- the carrier platform (3) comprises a mechanical connector (4), wherein
- in the use position, on the carrier platform (3), a carrier module (5) comprising a mechanical connection device (6) can be connected to the connector (4) of the carrier platform (3) and can be removed again, wherein
- in the park position, carrier modules (5) cannot be connected, **characterised in that**
- the carrier module (5) can be connected to an electric power supply circuit via the connection device (6) and the connector (4) of the carrier platform (3), wherein
- control signals can be transmitted to the carrier module (5) as an alternative to, in addition to or alternately with the connection to the electric power supply circuit.

2. Vehicle seat (1) according to claim 1, **characterised in that** the vehicle seat (1) comprises at least one armrest (2), wherein at least one recess (12) and one movable carrier platform (3) are arranged on or in an armrest (2).

3. Vehicle seat (1) according to claim 2, **characterised in that** in the use position, at least one carrier platform (3) projects out of the armrest (2) in the direction of the seat.

4. Vehicle seat (1) according to either claim 2 or claim 3, **characterised in that** in the use position, at least one carrier platform (3) projects out of the armrest (2) in the opposite direction to the seat.

5. Vehicle seat (1) according to any of the preceding claims, **characterised in that** in the park position, the carrier platform (3) can be inserted at least far enough into the recess (12) that the mechanical connector (4) is covered.

6. Vehicle seat (1) according to any of the preceding claims, **characterised in that** the connection device (6) of a carrier module (5) can be connected to the connector (4) of the carrier platform (3) in a rotatable manner.

7. Vehicle seat (1) according to any of the preceding claims, **characterised in that** at least two electric sliding contacts (7) can be closed between the connector (4) and the connection device (6).

8. Vehicle seat (1) according to any of the preceding claims, **characterised in that** the carrier module (5) comprises a tray and/or a drinks holder and/or a book holder.

9. Vehicle seat (1) according to any of the preceding claims, **characterised in that** the carrier module (5) comprises a telephone holder and/or a screen holder and/or a screen.

10. Vehicle seat (1) according to any of the preceding claims, **characterised in that** a storage space for at least one carrier module (5) is provided on the vehicle seat (1).

## Revendications

1. Siège de véhicule (1), dans lequel le siège de véhicule (1) comporte au moins un logement (12) et une plate-forme de support (3) mobile, dans lequel
- la plate-forme de support (3) peut être déplacée depuis une position de stationnement dans une position d'utilisation, dans lequel
- la plate-forme de support (3) est maintenue dans le logement (12) dans la position de stationnement,
- la plate-forme de support (3) comporte un connecteur de raccordement (4) mécanique, dans lequel
- sur la plate-forme de support (3), dans la position d'utilisation, un module de support (5) doté d'un dispositif de raccordement (6) mécanique peut être connecté au connecteur de raccordement (4) de la plate-forme de support (3) et déconnecté de celui-ci, dans lequel
- aucun raccordement de modules de support (5) n'est possible dans la position de stationnement, **caractérisé en ce que**
- le module de support (5) peut être raccordé à un circuit d'alimentation électrique par le biais du dispositif de raccordement (6) et du connecteur de raccordement (4) de la plate-forme de support (3), dans lequel
- des signaux de commande peuvent être transmis au module de support (5) en alternative, en plus ou en alternance par rapport au raccordement au circuit d'alimentation électrique.

2. Siège de véhicule (1) selon la revendication 1, **caractérisé en ce que** le siège de véhicule (1) comprend au moins un accoudoir (2), dans lequel au moins un logement (12) et une plate-forme de support (3) mobile sont agencés à ou dans un accoudoir (2).

3. Siège de véhicule (1) selon la revendication 2, **caractérisé en ce qu'**au moins une plate-forme de support (3) dépasse de l'accoudoir (2) dans le sens du siège dans la position d'utilisation.

4. Siège de véhicule (1) selon la revendication 2 ou 3, **caractérisé en ce qu'**au moins une plate-forme de support (3) dépasse de l'accoudoir (2) dans le sens opposé au sens du siège dans la position d'utilisation.

5. Siège de véhicule (1) selon l'une des revendications précédentes, **caractérisé en ce que** la plate-forme de support (3) peut, dans la position de stationnement, coulisser dans le logement (12) assez loin pour que le connecteur de raccordement (4) mécanique soit couvert.

6. Siège de véhicule (1) selon l'une des revendications précédentes, **caractérisé en ce que** le dispositif de raccordement (6) d'un module de support (5) peut être raccordé de manière rotative au connecteur de raccordement (4) de la plate-forme de support (3).

7. Siège de véhicule (1) selon l'une des revendications précédentes, **caractérisé en ce qu'**au moins deux contacts électriques glissants (7) peuvent être verrouillés entre le connecteur de raccordement (4) et le dispositif de raccordement (6).

8. Siège de véhicule (1) selon l'une des revendications précédentes, **caractérisé en ce que** le module de support (5) comprend une tablette et/ou un porte-gobelet et/ou un repose-livre.

9. Siège de véhicule (1) selon l'une des revendications précédentes, **caractérisé en ce que** le module de support (5) comprend un support de téléphone et/ou un support d'écran et/ou un écran.

10. Siège de véhicule (1) selon l'une des revendications précédentes, **caractérisé en ce qu'**un espace de rangement est prévu sur le siège de véhicule (1) pour au moyen un module de support (5).
